# EUROPEAN PATENT APPLICATION

(11) **EP 3 550 861 A1**
(43) Date of publication of application: **09.10.2019**
(21) Application number: 17888848.3
(22) Date of filing: 19.12.2017
(51) Int. Cl.: H04W 4/00, H04B 7/0452, H04B 7/0456, H04B 7/0413, H04W 72/04, H04W 4/70

(54) **D2D COMMUNICATION METHOD AND DEVICE**

(30) Priority: 29.12.2016 CN 201611249922
(71) Applicant: Huawei Technologies Co., Ltd., Longgang District Shenzhen, Guangdong 518129 (CN)
(72) Inventor: PANG, Jiyong, Shenzhen, Guangdong 518129 (CN); SU, Hongjia, Shenzhen, Guangdong 518129 (CN); XIANG, Zhengzheng, Shenzhen, Guangdong 518129 (CN)
(74) Representative: Pfenning, Meinig & Partner mbB
(86) International application number: PCT/CN2017/117235
(87) International publication number: WO 2018/121355

(57) **Abstract**

Embodiments of the present invention provide a communication method, including: sending, by a first sending device, D2D communication request information to a network device, where the D2D communication includes communication between the first sending device and a receiving device, and the D2D communication request information includes identification information of the receiving device; obtaining, by the first sending device, sidelink control information corresponding to the first sending device, where the sidelink control information corresponding to the first sending device includes MIMO transmission configuration parameter information; and sending, by the first sending device, data to the receiving device in a MIMO manner based on the sidelink control information corresponding to the first sending device. According to the embodiments of the present invention, a MIMO technology is used in D2D transmission, so that a plurality of sending devices transmit same or different data to a same receiving device on a same resource, thereby increasing a transmission rate of a sidelink and improving resource multiplexing efficiency.

## Description

This application claims priority to Chinese Patent Application No. 201611249922.1, filed with the Chinese Patent Office on December 29, 2016 and entitled "D2D COMMUNICATION METHOD AND DEVICE", which is incorporated herein by reference in its entirety.

### TECHNICAL FIELD

The present invention relates to communications technologies, and in particular, to a D2D (English full name: device to device, Chinese full name: device-to-device) communication method and a device.

### BACKGROUND

An increase in density of terminal devices in a network leads to more requirements for D2D (English full name: device to device, Chinese full name: device-to-device) communication. The D2D communication may also be referred to as direct communication between terminal devices. The D2D communication is not restricted by network coverage, and may be implemented in a plurality of cases, for example, when there is network coverage, or no network coverage, or partial network coverage. The D2D communication plays an active role in aspects such as lightening base station load, shortening a communication latency, and reducing UE power consumption. A D2D technology may be applied to various fields including public security, internet of vehicles, advertisement push, rescue and relief work, and the like. In these fields, discovery, synchronization, communication, and the like of terminal devices in D2D communication are performed based on a broadcast (broadcast) manner. In other words, a 1-to-M (M→∞ infinity) case is considered.

However, the D2D technology further evolves to be applicable to another application scenario, for example, a unicast scenario. There may be three unicast transmission scenarios. Scenario 1: One-to-one (1-to-1) scenario: In the one-to-one scenario, one terminal device directly communicates with one terminal device. Scenario 2: One-to-many (1-to-M) scenario: In the one-to-many scenario, there are a plurality of receive ends, but a service from a transmit end to each of the receive ends is a unicast service. The one-to-many scenario is different from multicast (multicast) in which same service data is sent to a group of terminal devices. Scenario 3: Many-to-one (M-to-1) scenario: In the many-to-one scenario, there are a plurality of transmit ends, but a service from each of the transmit ends to a receive end is a unicast service. In the unicast scenario, how to implement D2D communication needs to be further studied.

### SUMMARY

In view of this, it is really necessary to provide a D2D communication method to implement D2D communication in a unicast scenario.

According to a first aspect, an embodiment of the present invention provides a communication method, including:
sending, by a first sending device, D2D (English full name: Device to Device, Chinese full name: device-to-device) communication request information to a network device, where the D2D communication includes communication between the first sending device and a receiving device, and the D2D communication request information includes identification information of the receiving device;
obtaining, by the first sending device, sidelink control information corresponding to the first sending device, where the sidelink control information corresponding to the first sending device includes MIMO (English full name: Multiple Input Multiple Output, Chinese full name: multiple-input multiple-output) transmission configuration parameter information; and
sending, by the first sending device, data to the receiving device in a MIMO manner based on the MIMO transmission configuration parameter information included in the sidelink control information corresponding to the first sending device.

To obtain the sidelink control information corresponding to the first sending device, in a possible manner, the first sending device receives the sidelink control information corresponding to the first sending device that is sent by the receiving device, where the sidelink control information corresponding to the first sending device is determined by the receiving device based on D2D transmission information corresponding to the first sending device that is sent by the network device, the D2D transmission information includes MIMO transmission control information, and the MIMO transmission configuration parameter information is determined based on the MIMO transmission control information.

To obtain the sidelink control information corresponding to the first sending device, in a possible manner, the first sending device receives D2D transmission information corresponding to the first sending device that is sent by the network device, and the first sending device determines, based on the D2D transmission information corresponding to the first sending device, the sidelink control information corresponding to the first sending device, where the D2D transmission information includes MIMO transmission control information, and the first sending device determines, based on the MIMO transmission control information included in the D2D transmission information corresponding to the first sending device, the MIMO transmission configuration parameter information included in the sidelink control information corresponding to the first sending device; and the method further includes: sending, by the first sending device, the sidelink control information corresponding to the first sending device to the receiving device.

Optionally, in a possible manner, the method further includes:
receiving, by the first sending device, D2D transmission information corresponding to a second sending device that is sent by the network device; determining, by the first sending device based on the D2D transmission information corresponding to the second sending device, sidelink control information corresponding to the second sending device; sending, by the first sending device, the sidelink control information corresponding to the second sending device to the receiving device; and sending, by the first sending device and the second sending device, data to the receiving device in the MIMO manner.

Optionally, in a possible manner, the method further includes:
receiving, by the first sending device, the D2D transmission information corresponding to the second sending device that is sent by the network device; determining, by the first sending device based on the D2D transmission information corresponding to the second sending device, the sidelink control information corresponding to the second sending device; and sending, by the first sending device, the sidelink control information corresponding to the second sending device to the second sending device.

To obtain the sidelink control information corresponding to the first sending device, in a possible manner,
the first sending device receives the sidelink control information corresponding to the first sending device that is sent by a second sending device, where the sidelink control information corresponding to the first sending device is determined by the second sending device based on received D2D transmission information corresponding to the first sending device that is sent by the network device, the D2D transmission information includes MIMO transmission control information, and the MIMO transmission configuration parameter information included in the sidelink control information corresponding to the first sending device is determined by the second sending device based on the MIMO transmission control information included in the D2D transmission information corresponding to the first sending device.

Optionally, if the network device needs to send downlink data to the receiving device, the first sending device and the network device send data to the receiving device in the MIMO manner.

According to a second aspect, an embodiment of the present invention provides a communication method, including:
obtaining, by a receiving device, sidelink control information corresponding to a first sending device, where the sidelink control information corresponding to the first sending device includes MIMO (English full name: Multiple Input Multiple Output, Chinese full name: multiple-input multiple-output) transmission configuration parameter information; and
receiving, by the receiving device, data sent by the first sending device to the receiving device in a MIMO manner based on the MIMO transmission configuration parameter information included in the sidelink control information corresponding to the first sending device.

To obtain the sidelink control information corresponding to the first sending device, in a possible manner, the receiving device receives D2D (English full name: Device to Device, Chinese full name: device-to-device) transmission information corresponding to the first sending device that is sent by a network device; the receiving device determines, based on the D2D transmission information corresponding to the first sending device, the sidelink control information corresponding to the first sending device, where the D2D transmission information includes MIMO transmission control information, and the receiving device determines, based on the MIMO transmission control information included in the D2D transmission information corresponding to the first sending device, the MIMO transmission configuration parameter information included in the sidelink control information corresponding to the first sending device; and the method further includes: sending, by the receiving device, the sidelink control information corresponding to the first sending device to the first sending device.

Optionally, in a possible manner, the method further includes:
receiving, by the receiving device, D2D transmission information corresponding to a second sending device that is sent by the network device; and determining, by the receiving device based on the D2D transmission information corresponding to the second sending device, sidelink control information corresponding to the second sending device, where the D2D transmission information includes MIMO transmission control information, and the receiving device determines, based on the MIMO transmission control information included in the D2D transmission information corresponding to the second sending device, MIMO transmission configuration parameter information included in the sidelink control information corresponding to the second sending device; and sending, by the receiving device, the sidelink control information corresponding to the second sending device to the second sending device.

To obtain the sidelink control information corresponding to the first sending device, in a possible manner, the receiving device receives the sidelink control information corresponding to the first sending device that is sent by the first sending device, where the sidelink control information corresponding to the first sending device is determined by the first sending device based on D2D transmission information corresponding to the first sending device that is received from a network device.

Optionally, in a possible manner, the method further includes:
receiving, by the receiving device, sidelink control information corresponding to a second sending device that is sent by the first sending device, where the sidelink control information corresponding to the second sending device is determined by the first sending device based on D2D transmission information corresponding to the second sending device that is received from the network device.

Optionally, in a possible manner, the method further includes: receiving, by the receiving device, downlink control information sent by the network device; and if the network device needs to send downlink data to the receiving device, the receiving, by the receiving device, data sent by the first sending device to the receiving device in a MIMO manner based on the sidelink control information corresponding to the first sending device includes: receiving, by the receiving device, data sent by the first sending device and the network device to the receiving device in the MIMO manner.

According to a third aspect, an embodiment of the present invention provides a communication method, including:
receiving, by a network device, D2D (English full name: Device to Device, Chinese full name: device-to-device) communication request information sent by a first sending device, where the D2D communication includes communication between the first sending device and a receiving device, and the D2D communication request information includes identification information of the receiving device;
determining, by the network device, D2D transmission information corresponding to the first sending device, where the D2D transmission information includes MIMO transmission control information; and
sending, by the network device, the D2D transmission information corresponding to the first sending device.

Optionally, if D2D communication request information that is sent by a second sending device and received by the network device also includes the identification information of the receiving device, the method further includes: determining, by the network device, that the first sending device and the second sending device send data to the receiving device in a MIMO manner.

Optionally, if the network device also needs to send data to the receiving device, the method further includes: determining, by the network device, that the network device and the first sending device send data to the receiving device in the MIMO manner.

Optionally, the sending, by the network device, the D2D transmission information corresponding to the first sending device includes: sending, by the network device, the D2D transmission information corresponding to the first sending device to the receiving device.

Optionally, the sending, by the network device, the D2D transmission information corresponding to the first sending device includes: sending, by the network device, the D2D transmission information corresponding to the first sending device to the first sending device.

Optionally, the method further includes:
sending, by the network device, D2D transmission information corresponding to the second sending device to the first sending device.

According to a fourth aspect, a computer readable storage medium is provided. The computer readable storage medium stores executable program code, and the program code is used to implement the method according to the first aspect.

According to a fifth aspect, a computer readable storage medium is provided. The computer readable storage medium stores executable program code, and the program code is used to implement the method according to the second aspect.

According to a sixth aspect, a computer readable storage medium is provided. The computer readable storage medium stores executable program code, and the program code is used to implement the method according to the third aspect.

According to a seventh aspect, a sending device is provided. The device includes modules for performing the method according to the first aspect.

According to an eighth aspect, a receiving device is provided. The device includes modules for performing the method according to the second aspect.

According to a ninth aspect, a network device is provided. The device includes modules for performing the method according to the third aspect.

According to a tenth aspect, a sending device is provided. The sending device includes a processor, a transceiver, and a memory, and the processor reads a program in the memory to perform the method according to the first aspect.

According to an eleventh aspect, a receiving device is provided. The receiving device includes a processor, a transceiver, and a memory, and the processor reads a program in the memory to perform the method according to the second aspect.

According to a twelfth aspect, a network device is provided. The network device includes a processor, a transceiver, and a memory, and the processor reads a program in the memory to perform the method according to the third aspect.

According to the D2D communication method provided in the embodiments of the present invention, the D2D communication in the unicast scenario is implemented. In addition, a MIMO technology is used in D2D transmission, so that a plurality of sending devices transmit same or different data to a same receiving device on a same resource, thereby increasing a transmission rate of a sidelink and improving resource multiplexing efficiency.

### BRIEF DESCRIPTION OF DRAWINGS

FIG. 1 is a schematic diagram of a D2D communications system according to an embodiment of the present invention;
FIG. 2 is a schematic diagram of links in D2D communication according to an embodiment of the present invention;
FIG. 3 is a schematic flowchart of a D2D communication method according to an embodiment of the present invention;
FIG. 4 is a schematic flowchart of another D2D communication method according to an embodiment of the present invention;
FIG. 5 is a schematic flowchart of another D2D communication method according to an embodiment of the present invention;
FIG. 6 is a schematic flowchart of another D2D communication method according to an embodiment of the present invention;
FIG. 7 is a structural implementation diagram of a first sending device according to an embodiment of the present invention;
FIG. 8 is a schematic structural diagram of another first sending device according to an embodiment of the present invention;
FIG. 9 is a structural implementation diagram of a receiving device according to an embodiment of the present invention;
FIG. 10 is a schematic structural diagram of another receiving device according to an embodiment of the present invention;
FIG. 11 is a structural implementation diagram of a network device according to an embodiment of the present invention; and
FIG. 12 is a schematic structural diagram of another network device according to an embodiment of the present invention.

### DESCRIPTION OF EMBODIMENTS

Embodiments of the present invention provide a D2D communication method and a device, which are mainly used in a unicast scenario and can implement D2D communication in the unicast scenario. Especially in a many-to-one (M-to-1) unicast scenario, a plurality of sending devices can transmit data to a same destination receiving device on a same resource, so that transmission efficiency of a D2D link can be improved.

The following clearly and completely describes technical solutions in the embodiments of the present invention with reference to the accompanying drawings in the embodiments of the present invention. Apparently, the described embodiments are merely some but not all of the embodiments of the present invention. All other embodiments derived by a person skilled in the art based on the embodiments of the present invention without creative efforts shall fall within the protection scope of the present invention.

In the specification, claims, and accompanying drawings of the present invention, the terms "first", "second", and so on are intended to distinguish between similar objects but do not necessarily indicate a specific order or sequence. It should be understood that the data termed in such a way may be interchanged in proper circumstances, so that the embodiments described herein can be implemented in an order other than the order illustrated or described herein. In addition, the terms "include", "have", or any other variants thereof are intended to cover a non-exclusive inclusion. For example, a process, a method, a system, a product, or a device that includes a series of steps or modules is not necessarily limited to the steps or modules that are expressly listed, but may include another step or module not expressly listed or inherent to the process, the method, the product, or the device. Module division in this specification is merely logical division, and there may be another division manner during implementation in actual application. For example, a plurality of modules may be combined or integrated into another system, or some features may be ignored or not performed. In addition, the displayed or discussed mutual couplings or direct couplings or communication connections may be implemented through some interfaces. Indirect couplings or communication connections between the modules may be implemented in electrical or another form, and this is not limited in this specification. In addition, modules or submodules described as separate components may be or may not be physically separated, or may be or may not be physical modules, or may be distributed in a plurality of circuit modules. Objectives of the solutions in the embodiments of the present invention may be achieved by selecting some or all of the modules based on an actual requirement.

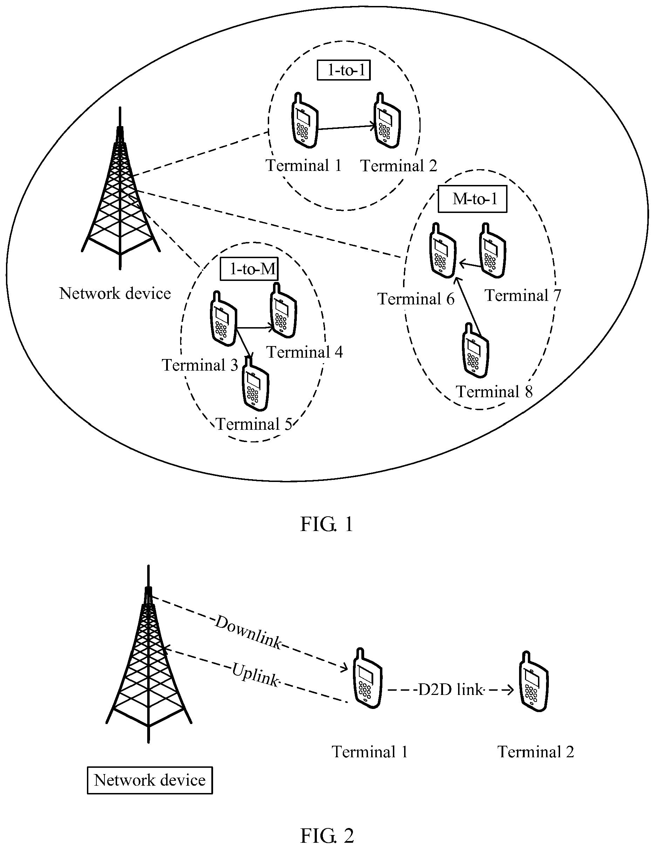

The embodiments of this application may be applied to a D2D communications system, and the D2D communications system usually includes a network device and a terminal device, as shown in FIG. 1. A terminal device that sends D2D data is referred to as a sending device, and a device that receives the D2D data is referred to as a receiving device.

It should be noted that a wireless communications system mentioned in the embodiments of this application includes but is not limited to: a narrowband internet of things (English: Narrow Band-Internet of Things, NB-IoT for short) system, a global system for mobile communications (English: Global System for Mobile Communications, GSM for short), an enhanced data rates for GSM evolution (English: Enhanced Data rate for GSM Evolution, EDGE for short) system, a wideband code division multiple access (English: Wideband Code Division Multiple Access, WCDMA for short) system, a code division multiple access 2000 (English: Code Division Multiple Access, CDMA2000 for short) system, a time division-synchronous code division multiple access (English: Time Division-Synchronization Code Division Multiple Access, TD-SCDMA for short) system, a long term evolution (English: Long Term Evolution, LTE for short) system, and a next-generation 5G mobile communications system.

A network side device in the present invention is a device for connecting a terminal device to a wireless network, and the network device may be a base station, including but not limited to: an evolved NodeB (English full name: evolved Node Base, eNB for short), a radio network controller (English full name: Radio Network Controller, RNC for short), a NodeB (English full name: NodeB, NB for short), a base station controller (English full name: Base Station Controller, BSC for short), a base transceiver station (English full name: Base Transceiver Station, BTS for short), a home evolved NodeB or home NodeB (for example, a Home evolved NodeB or a Home NodeB, HNB for short), or a baseband unit (English full name: BaseBand Unit, BBU for short). The base station may be, for example, a NodeB NB (NodeB), an evolved NodeB eNB (enhanced NodeB), or a next generation new radio (NR, New Radio) base station (for example, gNB).

A terminal device (Terminal Device) in the present invention may be a device that provides a user with voice and/or data connectivity, a handheld device having a wireless connection function, or another processing device connected to a wireless modem. The terminal device may communicate with one or more core networks by using a radio access network (English full name: Radio Access Network, RAN for short). The terminal device may be a mobile terminal, such as a mobile phone (or referred to as a "cellular" phone) and a computer with a mobile terminal. For example, the terminal device may be a portable, pocket-sized, handheld, computer built-in, or in-vehicle mobile apparatus, and exchanges voice and/or data with the radio access network. For example, the terminal device may be a device such as a personal communications service (English full name: Personal Communication Service, PCS for short) phone, a cordless telephone set, a session initiation protocol (SIP) phone, a wireless local loop (Wireless Local Loop, WLL for short) station, or a personal digital assistant (English full name: Personal Digital Assistant, PDA for short). A wireless terminal may also be referred to as a system, a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a terminal device, a user agent (User Agent), a user device (User Device), or user equipment (User Equipment).

Control signaling in this application may be a combination of one or more of L1 (layer 1 physical layer) signaling, L2 (layer 2 data link layer) signaling (which is mainly MAC layer signaling), and L3 (higher layer) signaling (such as RRC (Radio Resource Control, radio resource control) signaling).

As shown in FIG. 1, in a one-to-one scenario, D2D transmission is performed between a terminal device 1 and a terminal device 2. If terminal devices at a receive end and a transmit end of a D2D link each have more than one antenna, in a particular channel condition, a MIMO (Multiple Input Multiple Output, multiple-input multiple-output) spatial multiplexing technology may be used to transmit more than one independent data flow on a same time-frequency resource on the D2D link, thereby increasing a transmission rate of a sidelink. In the one-to-many (1-to-M) scenario, there are a plurality of receive ends, but a service from a transmit end to each of the receive ends is a unicast service. For example, a terminal device 3 may send separate data flows to a terminal device 4 and a terminal device 5. In the one-to-many scenario, one sending device may send independent data flows (namely, a plurality of unicast service flows) to more than one receiving device on a same time-frequency resource by using an MU (Multiple User, multiple user) MIMO technology. In a many-to-one scenario, there are a plurality of transmit ends, but a service from each of the transmit ends to a receive end is a unicast service. For example, a terminal device 7 and a terminal device 8 may send separate data flows to a terminal device 6. In the many-to-one scenario, one receiving device may also receive unicast service flows from more than one sending device on a same time-frequency resource by using the MU MIMO technology. If service flows sent by two or more sending devices are the same, the receiving device may use a MIMO diversity manner to improve transmission reliability of the service flow data, and use a MIMO technology to improve efficiency of D2D communication.

The following first briefly describes some concepts that may be used in the embodiments of the present invention.

D2D communication relates to three types of links, including: an uplink, a downlink, and a D2D link. For example, FIG. 2 is a schematic diagram of links. The downlink is usually a link from a network device to a terminal device. For example, a link from a network device to a terminal device 1 in FIG. 2 is a downlink. An uplink is usually a link from a terminal device to a network device. For example, a link from the terminal device 1 to the network device in FIG. 2 is an uplink. The D2D link may also be referred to as a sidelink (sidelink). The D2D link is usually a link used for direct communication between a terminal device and another terminal device. For example, a link between the terminal device 1 and a terminal device 2 in FIG. 2 is a D2D link. The D2D link may also be understood as an interface that is used between the terminal devices for neighbor discovery or direct communication. The interface is usually associated with a specific group of physical channels/signals and logical channels.

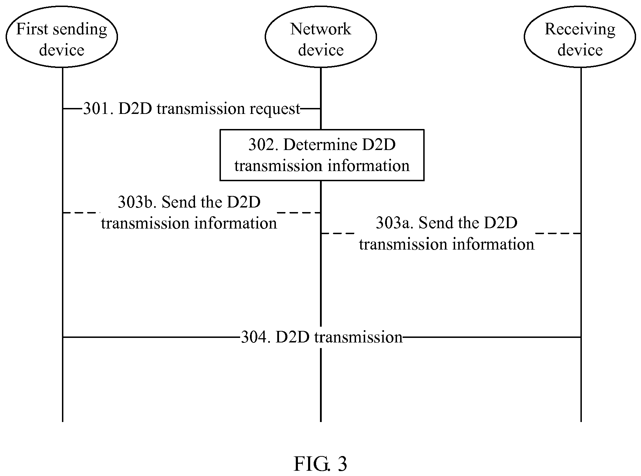

FIG. 3 is a schematic flowchart of a D2D communication method according to an embodiment of the present invention. In a broadcast scenario, a receiving device in D2D communication is not a determined receiving device. In the broadcast scenario, broadcast communication is used for the D2D communication, and there are one or more receiving devices. In a unicast scenario, there is one determined receiving device.

As shown in FIG. 3, the D2D communication method provided in this embodiment of the present invention may include the following steps.

Step 301: A first sending device sends D2D transmission request information to a network device, where the D2D transmission request information may be used to request the network device to perform D2D transmission. The network device receives the D2D transmission request information.

For the scenario shown in FIG. 2, in this embodiment of the present invention, it needs to be considered that MIMO transmission is supported in the D2D transmission. If a MIMO technology needs to be supported in the D2D transmission, the network device needs to determine whether a MIMO transmission manner needs to be used in the D2D transmission. To help the network device determine whether the MIMO transmission manner needs to be used in the D2D transmission, D2D transmission request information sent by a sending device to the network device includes identification information of the receiving device.

For example, the first sending device sends the D2D transmission request information to the network device, and the D2D transmission request information may include: an SR (Scheduling Request, scheduling request) sent by the first sending device to the network device, and a sidelink BSR (Buffer Status Report, buffer status report) further sent by the first sending device to the network device. The SR may be used to request a D2D transmission grant, and a plurality of BSRs may be reported after one SR. The BSR is used to report more detailed D2D transmission requirements to the network device. The SR may be a transmission request flag of 1-bit information transmitted at a physical layer, and the BSR may be transmitted through a MAC (Media Access Control, media access control) layer. The BSR may be included in a MAC header and a MAC control element of a MAC layer protocol data unit. Both the identification information of the receiving device and information about the BSR may be carried in MAC layer data.

Step 302: The network device determines D2D transmission information.

The D2D transmission information may be D2D transmission grant information. If the MIMO transmission manner needs to be used in the D2D transmission, the D2D transmission information may include MIMO transmission control information. If MU MIMO transmission is used, the D2D transmission information includes D2D information that is determined by the network device and that corresponds to each potential sending device using the MIMO for communication.

If more than one device sends data to a same receiving device, the network device may determine that the MU MIMO transmission is used. Devices sending data to the same receiving device include the first sending device, and may further include other sending devices or the network device. For example, more than one sending device sends D2D data to the same receiving device, and the network device may determine that the first network device and some or all of the other sending devices send data to the receiving device in an MU MIMO manner. Alternatively, if the network device also needs to send data to the receiving device, the network device may determine that the network device and the first sending device send data to the same receiving device in the MU MIMO manner. When the network device determines whether the MIMO transmission manner needs to be used in the D2D transmission, the network device may further consider some auxiliary information. The auxiliary information includes at least one of the following information: capability information of the sending device, capability information of the receiving device, or channel state information of a sidelink between the sending device and the receiving device. The capability information of the sending device may include whether the sending device supports MIMO or a quantity of MIMO spatial multiplexing data flows of the sending device. The capability information of the receiving device may include whether the receiving device supports MIMO or a quantity of MIMO spatial multiplexing data flows of the receiving device. The channel state information of the sidelink between the sending device and the receiving device may include a quantity of independent data flows that can be supported by the sidelink between the sending device and the receiving device.

If the network device determines that the MIMO transmission manner needs to be used in the D2D transmission, the network device may further determine the MIMO transmission control information. The MIMO transmission control information includes MIMO transmission control information that is determined by the network device and that corresponds to each potential sending device using the MIMO for communication. The network device may determine the MIMO transmission control information based on the auxiliary information. Content included in the MIMO transmission control information determined by the network device varies depending on different information obtained by the network device. The MIMO transmission control information may include at least one of the following information:
(1) Identification information that is determined by the network device and that is of the potential sending device using the MIMO for communication: The identification information that is determined by the network device and that is of the potential sending device using the MIMO for communication includes identification information of the first sending device. The network device sends the determined identification information of the potential sending device using the MIMO for communication to the sending device. If the identification information is sent to a sending device, the identification information of the potential sending device using the MIMO for communication may be sent, except identification information of the sending device to which the identification information is sent. For example, identification information that is of another potential sending device using the MIMO for communication and that is sent to the first sending device may not include the identification information of the first sending device. The network device may send the determined identification information of the potential sending device using the MIMO for communication to the receiving device. The network device may further send the identification information of the receiving device to the sending device or the receiving device.
(2) Capability information that is determined by the network device and that is of the potential sending device using the MIMO for communication and transmission or capability information that is of the receiving device and that is determined by the network device: The network device may send the capability information of the receiving device to the sending device, or the network device may send the capability information of the sending device to the receiving device.
(3) MIMO transmission configuration parameter information that is determined by the network device and that is of each of the potential sending devices using the MIMO for communication: Further, the network device determines MIMO transmission configuration parameter information of the receiving device. A MIMO parameter configuration parameter includes at least one of the following parameters: a transmission mode, a precoding indicator, an antenna port, reference information, an MCS (Modulation and Coding Scheme, modulation and coding scheme), and the like.
(4) D2D transmission resource: If a resource allocation manner based on scheduling by the network device is used, the network device further needs to notify the sending device or the receiving device of the D2D transmission resource. The resource may include a resource for sidelink control information transmission and a resource for sidelink data transmission. Alternatively, no distinguishing is performed.
(5) TA (Timing Advance, timing advance) indication information: The TA information is used to instruct the sending device to adjust a start moment at which sidelink data of the sending device is sent, so that data sent by the sending devices participating in the MIMO transmission arrives at the receiving device at a same moment.

Step 303: The network device sends the determined D2D transmission information.

Step 303 may include step 303a or step 303b. The D2D transmission information is determined in step 302.

Step 303a includes: The network device sends the D2D transmission information to the receiving device.

Step 303b includes: The network device sends the D2D transmission information to the potential sending device participating in the MIMO transmission. The potential sending device participating in the MIMO transmission includes the first sending device. The network device may send all or a part of the D2D transmission information of the potential sending device participating in the MIMO transmission to all or some of the potential sending devices participating in the MIMO transmission. For example, combined "common" D2D information (namely, the D2D transmission information of all the potential sending devices participating in the MIMO transmission) delivered by the network device is sent to some sending devices or a sending device specified by the network device. For example, the network device sends all or a part of D2D transmission information corresponding to each potential sending device participating in the MIMO transmission to the first sending device, and the first sending device receives D2D transmission information of another sending device, and may send the D2D transmission information of the another device to the corresponding sending device. Alternatively, the network device sends D2D transmission information corresponding to each potential sending device participating in the MIMO transmission to each potential sending device participating in the MIMO transmission.

In a scenario in which the network device may determine that the network device and the first sending device send data to the same receiving device in the MIMO manner, step 303 may include step 303b. In this scenario, step 303b includes: The network device may send all or a part of the D2D transmission information of all or some of the sending devices participating in the MIMO transmission to all or some of the potential sending devices participating in the MIMO transmission. Refer to the foregoing description of step 303b. In this scenario, the D2D communication method in this embodiment of the present invention further includes: sending, by the network device, downlink control information to the receiving device, where the downlink control information is used to indicate configuration information for downlink data transmission of the network device, such as resource information occupied by downlink data, and/or configuration parameter information required for receiving/demodulating the downlink data.

Step 304: The first sending device and the receiving device perform D2D transmission.

That the first sending device and the receiving device perform D2D transmission includes: A device (including the first sending device and the receiving device) receiving the D2D transmission information determines sidelink control information based on the received D2D transmission information, and performs the D2D transmission based on the determined sidelink control information. The sidelink control information includes MIMO (English full name: Multiple Input Multiple Output, Chinese full name: multiple-input multiple-output) transmission configuration parameter information, and the MIMO transmission configuration parameter information is determined based on the MIMO transmission control information. For example, MIMO transmission configuration parameter information included in sidelink control information corresponding to the first sending device is determined based on MIMO transmission control information included in D2D transmission information corresponding to the first sending device. If there is another sending device, MIMO transmission configuration parameter information included in sidelink control information corresponding to the another sending device is determined based on MIMO transmission control information included in D2D transmission information corresponding to the another sending device.

If step 303 includes step 303a, the receiving device determines, based on the received D2D transmission information, sidelink control information of each sending device participating in the MIMO transmission, and sends the determined sidelink control information of each sending device participating in the MIMO transmission to the corresponding sending device. For example, the receiving device determines the sidelink control information of the first sending device based on the received D2D transmission information of the first sending device, and sends the sidelink control information of the first sending device to the first sending device.

If step 303 includes step 303b, and the D2D transmission information received by the first sending device includes the D2D transmission information corresponding to the first sending device, the first sending device determines the sidelink control information of the first sending device based on the received D2D transmission information of the first sending device, and sends the sidelink control information of the first sending device to the receiving device.

Optionally, if step 303 includes step 303b, and the D2D transmission information received by the first sending device further includes D2D transmission information of another sending device, the first sending device determines sidelink control information of the another sending device based on the received D2D transmission information of the another sending device, and sends the sidelink control information of the another sending device to the receiving device. Optionally, the first sending device sends the sidelink control information of the another sending device to the another corresponding sending device.

Optionally, if step 303 includes step 303b, and the D2D transmission information received by the first sending device further includes D2D transmission information of another sending device, the first sending device sends the D2D transmission information of the another sending device to the another sending device, and the another sending device determines sidelink control information of the another sending device based on the received D2D transmission information of the another sending device.

The sidelink control information may include at least one of the following information:
(1) MIMO transmission configuration parameter information: A MIMO parameter configuration parameter includes at least one of the following parameters: a transmission mode, a precoding indicator, an antenna port, reference information, an MCS (Modulation and Coding Scheme, modulation and coding scheme), and the like. If the received D2D transmission information includes MIMO transmission configuration parameter information corresponding to each sending device participating in the MIMO transmission, the MIMO transmission configuration parameter may be determined based on the received MIMO transmission configuration parameter information corresponding to each sending device participating in the MIMO transmission. If a device that receives the D2D information considers that the received MIMO transmission configuration parameter information is not appropriate, the device that receives the D2D information may negotiate with the network device on a MIMO transmission configuration parameter or reselect a MIMO transmission configuration parameter. If the D2D transmission information sent by the network device does not include complete MIMO transmission configuration parameter information, the device that receives the D2D information may determine, based on sidelink channel state information obtained by the device, a MIMO transmit/receive capability of the sending device or the receiving device, and the like, sending devices participating in the MIMO transmission and respective MIMO transmission configuration parameters.
(2) Transmission configuration parameter for sending data to the receiving device by the sending device.
(3) Indication information of a D2D transmission resource: For a resource allocation manner based on scheduling by the network device, a resource carried in the sidelink control information is a universal set or a subset of resources carried in the D2D information notified by the network device. For a resource allocation manner based on terminal device self-selection, a resource carried in the sidelink control information is a D2D transmission resource selected from a resource pool for sidelink transmission.
(4) TA (Timing Advance, timing advance) indication information: The TA information is used to instruct the sending device to adjust a start moment at which sidelink data of the sending device is sent, so that data sent by the sending devices participating in the MIMO transmission arrives at the receiving device at a same moment.

According to the D2D communication method provided in this embodiment of the present invention, D2D communication in the unicast scenario is implemented. In addition, the MIMO technology is used in the D2D transmission, so that a plurality of sending devices transmit same or different data to a same receiving device on a same resource, thereby increasing a transmission rate of a sidelink and improving resource multiplexing efficiency.

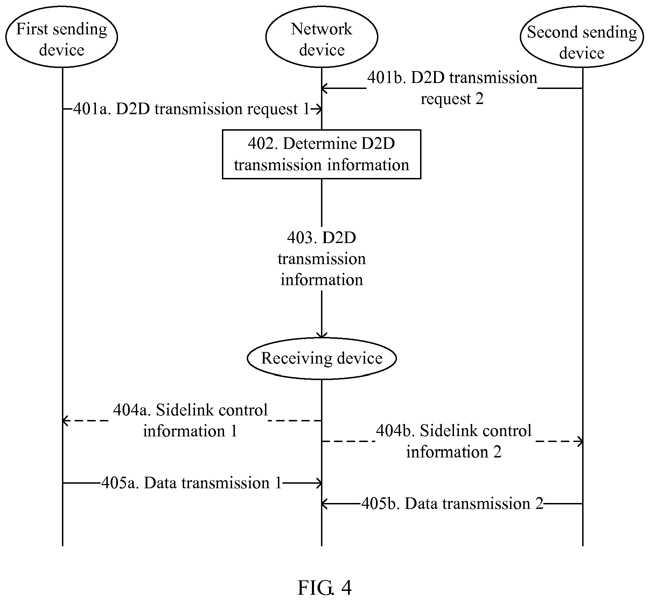

FIG. 4 is a schematic flowchart of another D2D communication method according to an embodiment of the present invention. In this embodiment, a network device sends determined D2D transmission information to a receiving device. Only two sending devices are shown in FIG. 4, and another sending device may further be included. A method is similar thereto.

Steps 401a and 401b: A first sending device and a second sending device each send D2D transmission request information to the network device.

This step is similar to step 301, and details are not described herein again.

Step 402: The network device receives D2D transmission requests sent by the first sending device and the second sending device, and determines D2D transmission information. This step is similar to step 302, and details are not described again.

Step 403: The network device sends the determined D2D transmission information to the receiving device.

This step is similar to step 303a.

Step 404a and step 404b: The receiving device sends sidelink control information of the first device to the first sending device and sends sidelink control information of the second device to the second sending device. For detailed descriptions of the sidelink control information, refer to the embodiment corresponding to FIG. 3. Details are not described herein again.

Before sending the sidelink control information, the receiving device determines the sidelink control information based on the received D2D transmission information.

Optionally, the receiving device determines, based on the received D2D transmission information, a sending device participating in MIMO transmission from potential sending devices participating in the MIMO transmission. For example, the receiving device selects, according to a principle such as rate maximization, M optimal sending devices from identification information of the potential sending devices using the MIMO for communication, to participate in the MIMO transmission.

That the receiving device sends sidelink control information to the first sending device and the second sending device includes: The receiving device sends the respective sidelink control information to the first sending device and the second sending device. The receiving device may send the sidelink control information to the first sending device and the second sending device at the same time or at different times. Alternatively, the receiving device may combine and include sidelink control information sent to different sending devices, into a piece of "common" sidelink control information, and deliver the information to a group of sending devices having a same group identifier, thereby reducing control information overheads. For example, in this case, MU MIMO radio resource allocation does not need to be indicated repeatedly.

Step 405a and step 405b: The first sending device and the second sending device each send data to the receiving device based on the respective sidelink control information.

If the sidelink control information includes MIMO transmission configuration parameter information, the first sending device and the second sending device transmit same or different data to a same receiving device on a same time-frequency resource in a MIMO manner, thereby increasing a transmission resource of a sidelink and improving resource multiplexing efficiency.

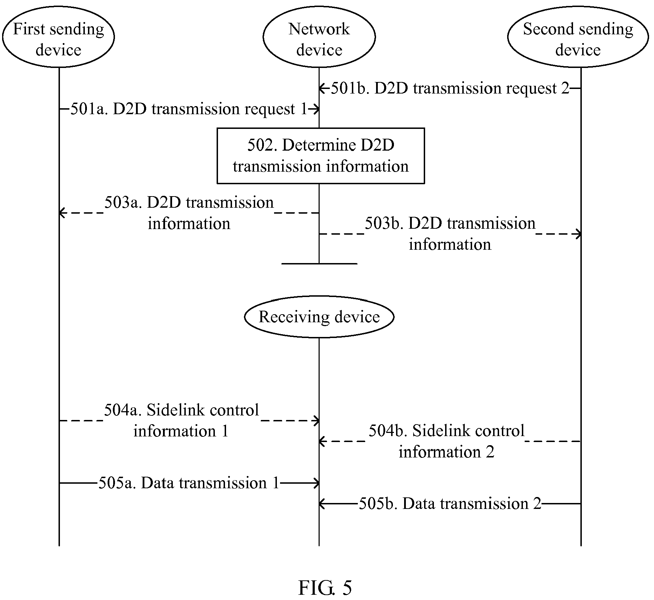

FIG. 5 is a schematic flowchart of another D2D communication method according to an embodiment of the present invention. In this embodiment, a network device sends determined D2D transmission information to a sending device. Only two sending devices are shown in FIG. 5, and another sending device may further be included. A method is similar thereto.

Steps 501a and 501b: A first sending device and a second sending device each send D2D transmission request information to a network device.

This step is similar to step 301, and details are not described herein again.

Step 502: The network device receives D2D transmission requests sent by the first sending device and the second sending device, and determines D2D transmission information, where the D2D transmission information includes D2D transmission information corresponding to the first sending device and D2D transmission information corresponding to the second sending device. This step is similar to step 302, and details are not described again.

Step 503a: The network device sends determined D2D transmission information 1 to the first sending device. Step 503b: The network device sends determined D2D transmission information 2 to the second sending device.

The steps are similar to step 303b, and similar parts are not described again.

That the network device sends the determined D2D transmission information to the first sending device and the second sending device may correspond to three cases:
(1) Both step 503a and step 503b are included in this embodiment of the present invention. To be specific, the network device respectively sends D2D transmission information corresponding to the first sending device and D2D transmission information corresponding to the second sending device to the first sending device and the second sending device.
(2) Step 503a is included in this embodiment of the present invention. To be specific, the network device sends D2D transmission information corresponding to the first sending device and D2D transmission information corresponding to the second sending device to the first sending device. Then the first sending device sends the D2D transmission information corresponding to the second sending device to the second sending device. The D2D transmission information corresponding to the first sending device and the D2D transmission information corresponding to the second sending device that are sent by the network device to the first sending device may be combined "common" D2D information (namely, D2D transmission information of all potential sending devices participating in MIMO transmission).
(3) Step 503b is included in this embodiment of the present invention. The third case is similar to the second case, and details are not described herein again.

Step 504a: The first sending device sends sidelink control information 1 to a receiving device. Step 504b: The second sending device sends sidelink control information 2 to the receiving device. For detailed descriptions of sidelink control information, refer to the embodiment corresponding to FIG. 3, and similar parts are not described again.

Before sending the sidelink control information, the first sending device or the second sending device determines the sidelink control information based on the received D2D transmission information.

Optionally, the first sending device or the second sending device determines, based on the received D2D transmission information, a sending device participating in the MIMO transmission from the potential sending devices participating in the MIMO transmission. For example, the first sending device or the second sending device selects, according to a principle such as rate maximization, M optimal sending devices from identification information of the potential sending devices using the MIMO for communication, to participate in the MIMO transmission.

According to the three cases corresponding to steps 503a and 503b, that the sending device sends the sidelink control information to the receiving device may also respectively correspond to three cases.
(1) If both step 503a and step 503b are included in this embodiment of the present invention, step 504a and step 504b are included in this embodiment of the present invention. To be specific, the first sending device and the second sending device each determine respective sidelink control information based on the respective received D2D transmission information, and send the respective sidelink control information to the receiving device. Sidelink control information sent by all sending devices to the receiving device may be the same or different, and time and/or frequency domain resources occupied by the sidelink control information sent by all the sending devices to the receiving device may be the same or different.
(2) If step 503a is included in this embodiment of the present invention, step 504a, or step 504a and step 504b may be included in this embodiment of the present invention.
   If the network device sends the D2D transmission information corresponding to the first sending device and the D2D transmission information corresponding to the second sending device to the first sending device, and the first sending device knows both the D2D transmission information of the first sending device and the D2D transmission information of the second sending device, the first sending device may determine, based on the received D2D transmission information of the first sending device and the received D2D transmission information of the second sending device, the sidelink control information corresponding to the first sending device and the sidelink control information corresponding to the second sending device. If step 504a may be included in this embodiment of the present invention, the first sending device sends the sidelink control information corresponding to the first sending device and the sidelink control information corresponding to the second sending device to the receiving device. Further, the first sending device sends the sidelink control information corresponding to the second sending device to the second sending device. If step 504a and step 504b may be included in this embodiment of the present invention, the first sending device sends the sidelink control information corresponding to the first sending device to the receiving device. Further, the first sending device sends the sidelink control information corresponding to the second sending device to the second sending device. The second sending device sends the sidelink control information corresponding to the second sending device to the receiving device.
(3) If step 503b is included in this embodiment of the present invention, step 504b, or step 504b and step 504a may be included in this embodiment of the present invention. The third case is similar to the second case, and details are not described herein again.

Step 505a and step 505b: The first sending device and the second sending device each send data to the receiving device based on the respective sidelink control information.

If the sidelink control information includes MIMO transmission configuration parameter information, the first sending device and the second sending device transmit same or different data to a same receiving device on a same time-frequency resource in a MIMO manner, thereby increasing a transmission resource of a sidelink and improving resource multiplexing efficiency.

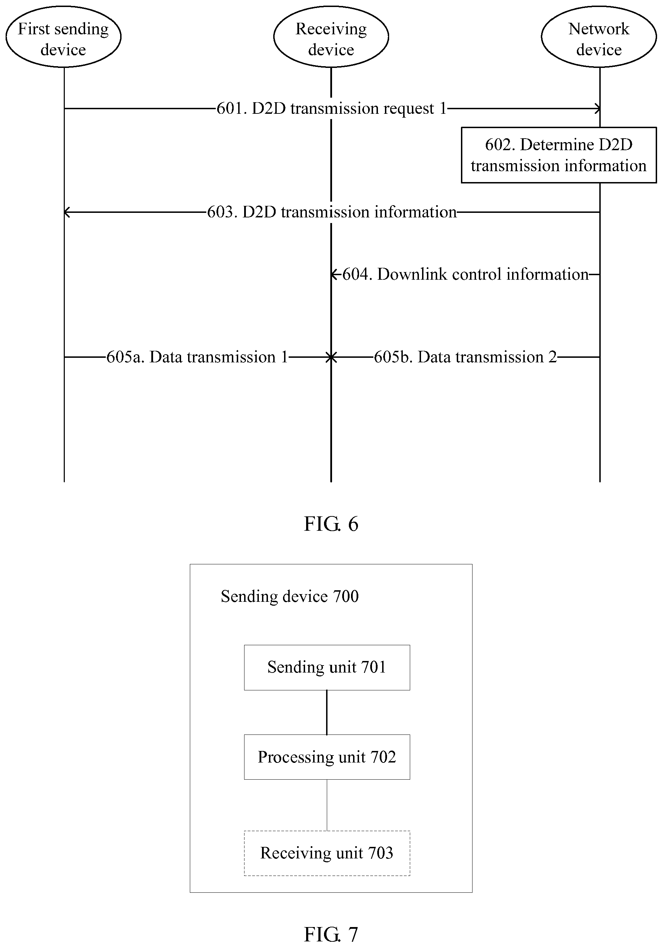

FIG. 6 is a schematic flowchart of another D2D communication method according to an embodiment of the present invention. This embodiment is applicable to a scenario in which a network device also needs to send downlink data to a receiving device. Only one sending device is shown in FIG. 6, and another sending device may further be included. The method corresponding to FIG. 6 may be combined with the methods corresponding to FIG. 4 and FIG. 5.

Step 601: A first sending device sends D2D transmission request information to the network device.

This step is similar to step 301, and details are not described herein again.

Step 602: The network device receives a D2D transmission request sent by the first sending device. If the network device also needs to send data to the receiving device, the network device may determine that the network device and the first sending device send data to the same receiving device in a MIMO manner, and determine D2D transmission information. This step is similar to step 302, and details are not described again.

Step 603: The network device sends the determined D2D transmission information to the first sending device.

This step is similar to step 303b and steps 503a and 503b, and similar parts are not described again. If there is another sending device in addition to the first sending device, for this step, refer to descriptions of steps 503a and 503b in FIG. 5. Details are not described herein again.

Step 604: The network device sends downlink control information to the receiving device, where the downlink control information is used to indicate configuration information for downlink data transmission of the network device, such as resource information occupied by downlink data, and/or a configuration parameter required for receiving/demodulating the downlink data.

Step 605a: The first sending device sends data to the receiving device based on the received D2D transmission information. Step 405b: The network device sends the data to the receiving device based on the downlink control information.

That the first sending device sends data to the receiving device based on the received D2D transmission information includes: The first sending device determines sidelink control information of the first sending device based on the received D2D transmission information, and sends the determined sidelink control information corresponding to the first sending device to the receiving device. The first sending device sends the data to the receiving device based on the sidelink control information of the first sending device.

If the sidelink control information includes MIMO transmission configuration parameter information, the first sending device and the network device transmit same or different data to a same receiving device on a same time-frequency resource in the MIMO manner, thereby increasing a transmission resource of a sidelink and improving resource multiplexing efficiency.

The method processing procedures provided in the embodiments of the present invention may be implemented by using a software program. The software program may be stored in a storage medium, and when the stored software program is invoked, the foregoing method steps are performed.

Based on a same inventive concept, an embodiment of the present invention further provides a first sending device. Because a problem resolving principle of the device is similar to that of the foregoing methods, for implementation of the device, refer to related descriptions in the method embodiments. Similar parts are not described again.

FIG. 7 is a structural implementation diagram of a first sending device according to an embodiment of the present invention. The first sending device 700 includes:
a sending unit 701, configured to send D2D (English full name: Device to Device, Chinese full name: device-to-device) communication request information to a network device, where the D2D communication includes communication between the first sending device and a receiving device, and the D2D communication request information includes identification information of the receiving device; and
a processing unit 702, configured to obtain sidelink control information corresponding to the first sending device, where the sidelink control information corresponding to the first sending device includes MIMO (English full name: Multiple Input Multiple Output, Chinese full name: multiple-input multiple-output) transmission configuration parameter information.

The sending unit is further configured to send data to the receiving device in a MIMO manner based on the sidelink control information corresponding to the first sending device.

A function of the processing unit may be implemented by using a processor.

Optionally, the first sending device further includes a receiving unit 703, configured to receive the sidelink control information corresponding to the first sending device that is sent by the receiving device, where the sidelink control information corresponding to the first sending device is determined by the receiving device based on D2D transmission information corresponding to the first sending device that is sent by the network device, the D2D transmission information includes MIMO transmission control information, and the MIMO transmission configuration parameter information is determined based on the MIMO transmission control information. For example, the MIMO transmission configuration parameter information included in the sidelink control information corresponding to the first sending device is determined based on the MIMO transmission control information included in the D2D transmission information corresponding to the first sending device. If there is another sending device, MIMO transmission configuration parameter information included in sidelink control information corresponding to the another sending device is determined based on MIMO transmission control information included in D2D transmission information corresponding to the another sending device.

A function of the sending unit and a function of the receiving unit may be implemented by using a transceiver.

Optionally, the first sending device further includes a receiving unit 703, configured to receive D2D transmission information corresponding to the first sending device that is sent by the network device; the processing unit 702 is configured to determine, by the device based on the D2D transmission information corresponding to the first sending device, the sidelink control information corresponding to the first sending device, where the D2D transmission information includes MIMO transmission control information, and the MIMO transmission configuration parameter information is determined based on the MIMO transmission control information; and the sending unit 701 is configured to send the sidelink control information corresponding to the first sending device to the receiving device.

Optionally, the receiving unit 703 is configured to receive D2D transmission information corresponding to a second sending device that is sent by the network device; the sending unit 701 is configured to send sidelink control information corresponding to the second sending device to the receiving device; and the sending unit 701 is configured to send data to the receiving device with the second sending device in the MIMO manner.

Optionally, the receiving device is configured to receive D2D transmission information corresponding to a second sending device that is sent by the network device; the processing unit is configured to determine, based on the D2D transmission information corresponding to the second sending device, sidelink control information corresponding to the second sending device; and the sending unit is configured to send the sidelink control information corresponding to the second sending device to the second sending device.

Optionally, the receiving unit is configured to receive the sidelink control information corresponding to the first sending device that is sent by a second sending device, where the sidelink control information corresponding to the first sending device is determined by the second sending device based on D2D transmission information corresponding to the first sending device that is sent by the network device, the D2D transmission information includes MIMO transmission control information, and the MIMO transmission configuration parameter information is determined based on the MIMO transmission control information.

Optionally, if the network device needs to send downlink data to the receiving device, the sending unit is configured to send data to the receiving device with the network device in the MIMO manner.

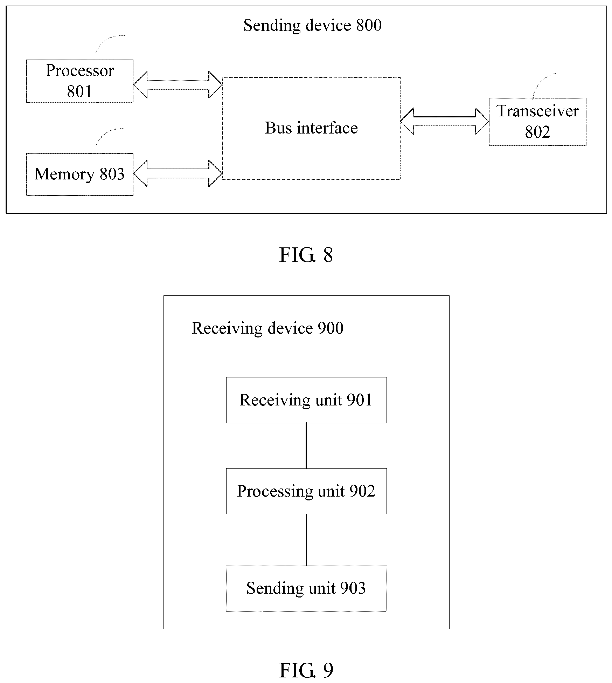

FIG. 8 is a schematic structural diagram of another first sending device according to an embodiment of the present invention. The first sending device includes a transceiver 802, a processor 801, and a memory 803.

The processor 801 reads a program in the memory 803 to control the transceiver 802, to perform the following process:
sending, by the transceiver 802, D2D (English full name: Device to Device, Chinese full name: device-to-device) communication request information to a network device, where the D2D communication includes communication between the first sending device and a receiving device, and the D2D communication request information includes identification information of the receiving device;
obtaining, by the processor 801, sidelink control information corresponding to the first sending device, where the sidelink control information corresponding to the first sending device includes MIMO (English full name: Multiple Input Multiple Output, Chinese full name: multiple-input multiple-output) transmission configuration parameter information; and
sending, by the transceiver 802, data to the receiving device in a MIMO manner based on the sidelink control information corresponding to the first sending device.

In FIG. 8, a bus architecture may include any quantity of interconnected buses and bridges, which are specifically linked together through various circuits of one or more processors represented by the processor 801 and a memory represented by the memory 803. The bus architecture may further connect various other circuits, such as a peripheral device, a voltage stabilizer, and a power management circuit. These are well known in the art, and therefore are not further described in this specification. A bus interface provides an interface. The transceiver 802 may be one element, or may be a plurality of elements, for example, a plurality of receivers and transmitters, providing a unit for communicating with various other apparatuses on a transmission medium. The processor 801 is responsible for managing the bus architecture and general processing, and may further provide various functions including timing, peripheral interfacing, voltage regulation, power management, and another control function. The memory 803 may store data used by the processor 801 when performing an operation.

Optionally, the processor 801 may be a central processing unit (CPU), an application-specific integrated circuit (Application Specific Integrated Circuit, ASIC for short), a field-programmable gate array (Field-Programmable Gate Array, FPGA for short), or a complex programmable logic device (Complex Programmable Logic Device, CPLD for short).

In this embodiment of the present invention, the processor 801 reads the program in the memory 803 to control the transceiver 802. For details about the performed processing, refer to related descriptions of the processing unit, the receiving unit, and the sending unit in the embodiment shown in FIG. 7. Details are not described herein again.

Based on a same inventive concept, an embodiment of the present invention further provides a receiving device. Because a problem resolving principle of the device is similar to that of the foregoing methods, for implementation of the device, refer to related descriptions in the method embodiments. Similar parts are not described again.

FIG. 9 is a structural implementation diagram of a receiving device according to an embodiment of the present invention. The receiving device 900 includes: a processing unit 902, a receiving unit 901, and a sending unit 903.

The processing unit 902 is configured to obtain sidelink control information corresponding to a first sending device. The sidelink control information corresponding to the first sending device includes MIMO (English full name: Multiple Input Multiple Output, Chinese full name: multiple-input multiple-output) transmission configuration parameter information.

The receiving unit 901 is configured to receive data sent by the first sending device to the receiving device in a MIMO manner based on the sidelink control information corresponding to the first sending device.

Optionally, the receiving unit 901 is configured to receive D2D (English full name: Device to Device, Chinese full name: device-to-device) transmission information corresponding to the first sending device that is sent by a network device; the processing unit 902 is configured to determine, based on the D2D transmission information corresponding to the first sending device, the sidelink control information corresponding to the first sending device, where the D2D transmission information includes MIMO transmission control information, and the MIMO transmission configuration parameter information is determined based on the MIMO transmission control information; and the sending unit 903 is configured to send the sidelink control information corresponding to the first sending device to the first sending device.

Optionally, the receiving unit 901 is configured to receive D2D transmission information corresponding to a second sending device that is sent by the network device; the processing unit 902 is configured to determine, based on the D2D transmission information corresponding to the second sending device, sidelink control information corresponding to the second sending device, where the D2D transmission information includes MIMO transmission control information, and MIMO transmission configuration parameter information is determined based on the MIMO transmission control information; and the sending unit 903 is configured to send the sidelink control information corresponding to the second sending device to the second sending device.

Optionally, the receiving unit 901 is configured to receive the sidelink control information corresponding to the first sending device that is sent by the first sending device. The sidelink control information corresponding to the first sending device is determined by the first sending device based on D2D transmission information corresponding to the first sending device that is received from a network device.

Optionally, the receiving unit 901 is configured to receive sidelink control information corresponding to a second sending device that is sent by the first sending device, and the sidelink control information corresponding to the second sending device is determined by the first sending device based on D2D transmission information corresponding to the second sending device that is received from a network device.

Optionally, the receiving unit 901 is configured to receive downlink control information sent by the network device. If the network device needs to send downlink data to the receiving device, the receiving unit 901 is configured to receive data sent by the first sending device and the network device to the receiving device in the MIMO manner.

Optionally, in this embodiment of the present invention, a function of the processing unit may be implemented by using a processor. A function of the receiving unit and a function of the sending unit may be implemented by using a transceiver.

Based on a same inventive concept, an embodiment of the present invention further provides another receiving device. Because a problem resolving principle of the device is similar to that of the foregoing methods, for implementation of the device, refer to related descriptions in the method embodiments. Similar parts are not described again.

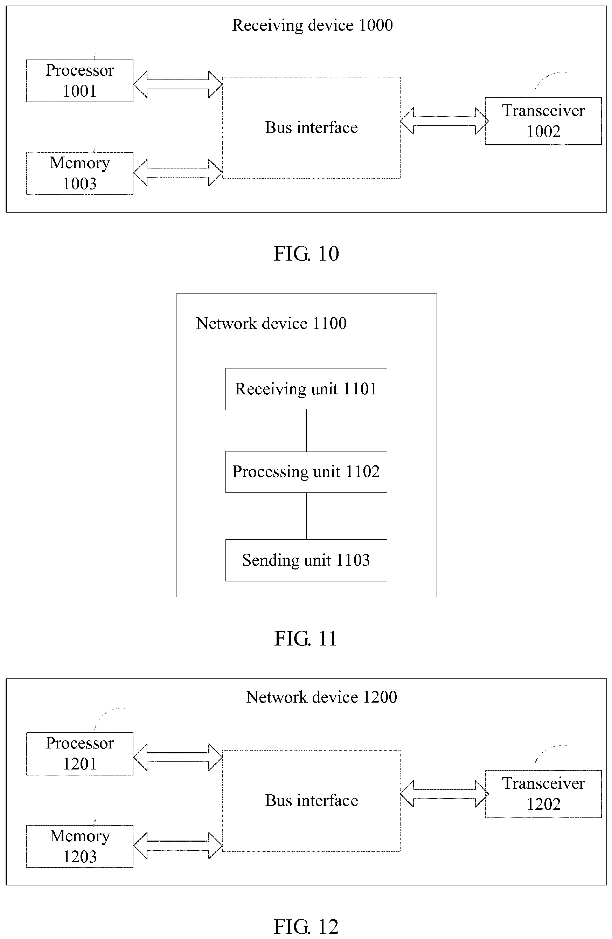

FIG. 10 is a schematic structural diagram of another receiving device according to an embodiment of the present invention. The receiving device 1000 includes a transceiver 1002, a processor 1001, and a memory 1003.

The processor 1001 reads a program in the memory 1003 to control the transceiver 1002, to perform the following process:
obtaining, by the processor 1001, sidelink control information corresponding to a first sending device, where the sidelink control information corresponding to the first sending device includes MIMO (English full name: Multiple Input Multiple Output, Chinese full name: multiple-input multiple-output) transmission configuration parameter information; and
receiving, by the transceiver 1002, data sent by the first sending device to the receiving device in a MIMO manner based on the sidelink control information corresponding to the first sending device.

In FIG. 10, a bus architecture may include any quantity of interconnected buses and bridges, which are specifically linked together through various circuits of one or more processors represented by the processor 1001 and a memory represented by the memory 1003. The bus architecture may further connect various other circuits, such as a peripheral device, a voltage stabilizer, and a power management circuit. These are well known in the art, and therefore are not further described in this specification. A bus interface provides an interface. The transceiver 1002 may be one element, or may be a plurality of elements, for example, a plurality of receivers and transmitters, providing a unit for communicating with various other apparatuses on a transmission medium. The processor 1001 is responsible for managing the bus architecture and general processing, and may further provide various functions, including timing, peripheral interfacing, voltage regulation, power management, and another control function. The memory 1003 may store data used by the processor 1001 when performing an operation.

Optionally, the processor 1001 may be a central processing unit (CPU), an application-specific integrated circuit (Application Specific Integrated Circuit, ASIC for short), a field-programmable gate array (Field-Programmable Gate Array, FPGA for short), or a complex programmable logic device (Complex Programmable Logic Device, CPLD for short).

In this embodiment of the present invention, the processor 1001 reads the program in the memory 1003 to control the transceiver 1002. For details about the performed processing, refer to related descriptions of the processing unit, the receiving unit, and the sending unit in the embodiment shown in FIG. 9. Details are not described herein again.

Based on a same inventive concept, an embodiment of the present invention further provides a network device. Because a problem resolving principle of the device is similar to that of the foregoing methods, for implementation of the device, refer to related descriptions in the method embodiments. Similar parts are not described again.

FIG. 11 is a structural implementation diagram of a network device according to an embodiment of the present invention. The network device 1100 includes: a receiving unit 1101, a processing unit 1102, and a sending unit 1103.

The receiving unit 1101 is configured to receive D2D (English full name: Device to Device, Chinese full name: device-to-device) communication request information sent by a first sending device. The D2D communication includes communication between the first sending device and a receiving device, and the D2D communication request information includes identification information of the receiving device.

The processing unit 1102 is configured to determine D2D transmission information corresponding to the first sending device. The D2D transmission information includes MIMO transmission control information.

The sending unit 1103 is configured to send the D2D transmission information corresponding to the first sending device.

Optionally, if D2D communication request information that is sent by a second sending device and received by the network device also includes the identification information of the receiving device, the processing unit 1102 is configured to determine that the first sending device and the second sending device send data to the receiving device in a MIMO manner.

Optionally, if the network device also needs to send data to the receiving device, the processing unit 1102 is configured to determine that the network device and the first sending device send data to the receiving device in the MIMO manner.

Optionally, the sending unit 1103 is configured to send the D2D transmission information corresponding to the first sending device to the receiving device.

Optionally, the sending unit 1103 is configured to send the D2D transmission information corresponding to the first sending device to the first sending device.

Optionally, the sending unit is configured to send D2D transmission information corresponding to the second sending device to the first sending device.

Optionally, in this embodiment of the present invention, a function of the processing unit may be implemented by using a processor. A function of the receiving unit and a function of the sending unit may be implemented by using a transceiver.

Based on a same inventive concept, an embodiment of the present invention further provides another network device. Because a problem resolving principle of the device is similar to that of the foregoing methods, for implementation of the device, refer to related descriptions in the method embodiments. Similar parts are not described again.

FIG. 12 is a schematic structural diagram of another network device according to an embodiment of the present invention. The network device 1200 includes a transceiver 1202, a processor 1201, and a memory 1203.

The processor 1201 reads a program in the memory 1203 to control the transceiver 1202, to perform the following process:
receiving, by the transceiver 1202, D2D (English full name: Device to Device, Chinese full name: device-to-device) communication request information sent by a first sending device, where the D2D communication includes communication between the first sending device and a receiving device, and the D2D communication request information includes identification information of the receiving device;
determining, by the processor 1201, D2D transmission information corresponding to the first sending device, where the D2D transmission information includes MIMO transmission control information; and
sending, by the transceiver 1202, the D2D transmission information corresponding to the first sending device.

In FIG. 12, a bus architecture may include any quantity of interconnected buses and bridges, which are specifically linked together through various circuits of one or more processors represented by the processor 1201 and a memory represented by the memory 1203. The bus architecture may further connect various other circuits, such as a peripheral device, a voltage stabilizer, and a power management circuit. These are well known in the art, and therefore are not further described in this specification. A bus interface provides an interface. The transceiver 1202 may be one element, or may be a plurality of elements, for example, a plurality of receivers and transmitters, providing a unit for communicating with various other apparatuses on a transmission medium. The processor 1201 is responsible for managing the bus architecture and general processing, and may further provide various functions, including timing, peripheral interfacing, voltage regulation, power management, and another control function. The memory 1203 may store data used by the processor 1201 when performing an operation.

Optionally, the processor 1201 may be a central processing unit (CPU), an application-specific integrated circuit (Application Specific Integrated Circuit, ASIC for short), a field-programmable gate array (Field-Programmable Gate Array, FPGA for short), or a complex programmable logic device (Complex Programmable Logic Device, CPLD for short).

In this embodiment of the present invention, the processor 1201 reads the program in the memory 1203 to control the transceiver 1002. For details about the performed processing, refer to related descriptions of the processing unit, the receiving unit, and the sending unit in the embodiment shown in FIG. 11. Details are not described herein again.

A person of ordinary skill in the art may understand that all or some of the steps of the foregoing methods may be implemented by a program instructing related hardware. The program may be stored in a computer readable storage medium. The storage medium is a ROM, a RAM, an optical disc, or the like.

In conclusion, the foregoing descriptions are merely example embodiments of the present invention, but are not intended to limit the protection scope of the present invention. Any modification, equivalent replacement, improvement, or the like made without departing from the spirit and principle of the present invention shall fall within the protection scope of the present invention.

## Claims

1. A communication method, comprising:
sending, by a first sending device, D2D (English full name: Device to Device, Chinese full name: device-to-device) communication request information to a network device, wherein the D2D communication comprises communication between the first sending device and a receiving device, and the D2D communication request information comprises identification information of the receiving device;
obtaining, by the first sending device, sidelink control information corresponding to the first sending device, wherein the sidelink control information corresponding to the first sending device comprises MIMO (English full name: Multiple Input Multiple Output, Chinese full name: multiple-input multiple-output) transmission configuration parameter information; and
sending, by the first sending device, data to the receiving device in a MIMO manner based on the MIMO transmission configuration parameter information comprised in the sidelink control information corresponding to the first sending device.

2. The method according to claim 1, wherein the obtaining, by the first sending device, sidelink control information corresponding to the first sending device comprises:
receiving, by the first sending device, the sidelink control information corresponding to the first sending device that is sent by the receiving device, wherein the sidelink control information corresponding to the first sending device is determined by the receiving device based on D2D transmission information corresponding to the first sending device that is sent by the network device, the D2D transmission information comprises MIMO transmission control information, and the MIMO transmission configuration parameter information is determined based on the MIMO transmission control information.

3. The method according to claim 1, wherein the obtaining, by the first sending device, sidelink control information corresponding to the first sending device comprises:
receiving, by the first sending device, D2D transmission information corresponding to the first sending device that is sent by the network device, wherein the D2D transmission information comprises MIMO transmission control information, and the first sending device determines, based on the MIMO transmission control information comprised in the D2D transmission information corresponding to the first sending device, the MIMO transmission configuration parameter information comprised in the sidelink control information corresponding to the first sending device; and
the method further comprises: sending, by the first sending device, the sidelink control information corresponding to the first sending device to the receiving device.

4. The method according to claim 3, further comprising:
receiving, by the first sending device, D2D transmission information corresponding to a second sending device that is sent by the network device;
determining, by the first sending device based on the D2D transmission information corresponding to the second sending device, sidelink control information corresponding to the second sending device; and
sending, by the first sending device, the sidelink control information corresponding to the second sending device to the receiving device, wherein
the performing, by the first sending device, the D2D communication with the receiving device based on the D2D communication information comprises:
sending, by the first sending device and the second sending device, data to the receiving device in the MIMO manner.

5. The method according to claim 3 or 4, further comprising:
receiving, by the first sending device, the D2D transmission information corresponding to the second sending device that is sent by the network device;
determining, by the first sending device based on the D2D transmission information corresponding to the second sending device, the sidelink control information corresponding to the second sending device; and
sending, by the first sending device, the sidelink control information corresponding to the second sending device to the second sending device.

6. The method according to claim 1, wherein the obtaining, by the first sending device, sidelink control information corresponding to the first sending device comprises:
receiving, by the first sending device, the sidelink control information corresponding to the first sending device that is sent by a second sending device, wherein the sidelink control information corresponding to the first sending device is determined by the second sending device based on received D2D transmission information corresponding to the first sending device that is sent by the network device, the D2D transmission information comprises MIMO transmission control information, and the MIMO transmission configuration parameter information comprised in the sidelink control information corresponding to the first sending device is determined by the second sending device based on the MIMO transmission control information comprised in the D2D transmission information corresponding to the first sending device.

7. The method according to claim 1, wherein if the network device needs to send downlink data to the receiving device, the performing, by the first sending device, the D2D communication with the receiving device based on the sidelink control information corresponding to the first sending device comprises:
sending, by the first sending device and the network device, data to the receiving device in the MIMO manner.

8. A communication method, comprising:
obtaining, by a receiving device, sidelink control information corresponding to a first sending device, wherein the sidelink control information corresponding to the first sending device comprises MIMO (English full name: Multiple Input Multiple Output, Chinese full name: multiple-input multiple-output) transmission configuration parameter information; and
receiving, by the receiving device, data sent by the first sending device to the receiving device in a MIMO manner based on the MIMO transmission configuration parameter information comprised in the sidelink control information corresponding to the first sending device.

9. The method according to claim 8, wherein the obtaining, by a receiving device, sidelink control information corresponding to a first sending device comprises:
receiving, by the receiving device, D2D (English full name: Device to Device, Chinese full name: device-to-device) transmission information corresponding to the first sending device that is sent by a network device; and determining, by the receiving device based on the D2D transmission information corresponding to the first sending device, the sidelink control information corresponding to the first sending device, wherein the D2D transmission information comprises MIMO transmission control information, and the receiving device determines, based on the MIMO transmission control information comprised in the D2D transmission information corresponding to the first sending device, the MIMO transmission configuration parameter information comprised in the sidelink control information corresponding to the first sending device; and
the method further comprises: sending, by the receiving device, the sidelink control information corresponding to the first sending device to the first sending device.

10. The method according to claim 9, further comprising:
receiving, by the receiving device, D2D transmission information corresponding to a second sending device that is sent by the network device; and determining, by the receiving device based on the D2D transmission information corresponding to the second sending device, sidelink control information corresponding to the second sending device, wherein the D2D transmission information comprises MIMO transmission control information, and the receiving device determines, based on the MIMO transmission control information comprised in the D2D transmission information corresponding to the second sending device, MIMO transmission configuration parameter information comprised in the sidelink control information corresponding to the second sending device; and
sending, by the receiving device, the sidelink control information corresponding to the second sending device to the second sending device.

11. The method according to claim 8, wherein the obtaining, by a receiving device, sidelink control information corresponding to a first sending device comprises:
receiving, by the receiving device, the sidelink control information corresponding to the first sending device that is sent by the first sending device, wherein the sidelink control information corresponding to the first sending device is determined by the first sending device based on D2D transmission information corresponding to the first sending device that is received from a network device.

12. The method according to claim 11, further comprising:
receiving, by the receiving device, sidelink control information corresponding to a second sending device that is sent by the first sending device, wherein the sidelink control information corresponding to the second sending device is determined by the first sending device based on D2D transmission information corresponding to the second sending device that is received from the network device.

13. The method according to any one of claims 8 to 12, wherein
the method further comprises: receiving, by the receiving device, downlink control information sent by the network device; and
if the network device needs to send downlink data to the receiving device, the receiving, by the receiving device, data sent by the first sending device to the receiving device in a MIMO manner based on the sidelink control information corresponding to the first sending device comprises:
receiving, by the receiving device, data sent by the first sending device and the network device to the receiving device in the MIMO manner.

14. A communication method, comprising:
receiving, by a network device, D2D (English full name: Device to Device, Chinese full name: device-to-device) communication request information sent by a first sending device, wherein the D2D communication comprises communication between the first sending device and a receiving device, and the D2D communication request information comprises identification information of the receiving device;
determining, by the network device, D2D transmission information corresponding to the first sending device, wherein the D2D transmission information comprises MIMO transmission control information; and
sending, by the network device, the D2D transmission information corresponding to the first sending device.

15. The method according to claim 14, wherein if D2D communication request information that is sent by a second sending device and received by the network device also comprises the identification information of the receiving device, the method further comprises:
determining, by the network device, that the first sending device and the second sending device send data to the receiving device in a MIMO manner.

16. The method according to claim 14 or 15, wherein if the network device also needs to send data to the receiving device, the method further comprises:
determining, by the network device, that the network device and the first sending device send data to the receiving device in the MIMO manner.

17. The method according to any one of claims 14 to 16, wherein the sending, by the network device, the D2D transmission information corresponding to the first sending device comprises:
sending, by the network device, the D2D transmission information corresponding to the first sending device to the receiving device.

18. The method according to any one of claims 14 to 16, wherein the sending, by the network device, the D2D transmission information corresponding to the first sending device comprises:
sending, by the network device, the D2D transmission information corresponding to the first sending device to the first sending device.

19. The method according to claim 18, further comprising:
sending, by the network device, D2D transmission information corresponding to the second sending device to the first sending device.

20. A first sending device, comprising:
a sending unit, configured to send D2D (English full name: Device to Device, Chinese full name: device-to-device) communication request information to a network device, wherein the D2D communication comprises communication between the first sending device and a receiving device, and the D2D communication request information comprises identification information of the receiving device; and
a processing unit, configured to obtain sidelink control information corresponding to the first sending device, wherein the sidelink control information corresponding to the first sending device comprises MIMO (English full name: Multiple Input Multiple Output, Chinese full name: multiple-input multiple-output) transmission configuration parameter information, wherein
the sending unit is further configured to send data to the receiving device in a MIMO manner based on the MIMO transmission configuration parameter information comprised in the sidelink control information corresponding to the first sending device.

21. The first sending device according to claim 20, wherein the first sending device further comprises a receiving unit, wherein
the receiving unit is configured to receive the sidelink control information corresponding to the first sending device that is sent by the receiving device, wherein the sidelink control information corresponding to the first sending device is determined by the receiving device based on D2D transmission information corresponding to the first sending device that is sent by the network device, the D2D transmission information comprises MIMO transmission control information, and the MIMO transmission configuration parameter information is determined based on the MIMO transmission control information.

22. The first sending device according to claim 20, wherein the first sending device further comprises a receiving unit, configured to receive D2D transmission information corresponding to the first sending device that is sent by the network device;
the processing unit is configured to determine, based on the D2D transmission information corresponding to the first sending device, the sidelink control information corresponding to the first sending device, wherein the D2D transmission information comprises MIMO transmission control information; and the processing unit is configured to determine, based on the MIMO transmission control information comprised in the D2D transmission information corresponding to the first sending device, the MIMO transmission configuration parameter information comprised in the sidelink control information corresponding to the first sending device; and
the sending unit is configured to send the sidelink control information corresponding to the first sending device to the receiving device.

23. The first sending device according to claim 22, wherein
the receiving unit is configured to receive D2D transmission information corresponding to a second sending device that is sent by the network device;
the sending unit is configured to send sidelink control information corresponding to the second sending device to the receiving device; and
the sending unit is configured to send data to the receiving device with the second sending device in the MIMO manner.

24. The first sending device according to claim 22, wherein
the receiving device is configured to receive D2D transmission information corresponding to a second sending device that is sent by the network device;
the processing unit is configured to determine, based on the D2D transmission information corresponding to the second sending device, sidelink control information corresponding to the second sending device; and
the sending unit is configured to send the sidelink control information corresponding to the second sending device to the second sending device.

25. The first sending device according to claim 20, wherein the receiving unit is configured to receive the sidelink control information corresponding to the first sending device that is sent by a second sending device, wherein the sidelink control information corresponding to the first sending device is determined by the second sending device based on received D2D transmission information corresponding to the first sending device that is sent by the network device, the D2D transmission information comprises MIMO transmission control information, and the MIMO transmission configuration parameter information comprised in the sidelink control information corresponding to the first sending device is determined by the second sending device based on the MIMO transmission control information comprised in the D2D transmission information corresponding to the first sending device.

26. The first sending device according to claim 20, wherein if the network device needs to send downlink data to the receiving device, the sending unit is configured to send data to the receiving device with the network device in the MIMO manner.

27. A receiving device, comprising:
a processing unit, configured to obtain sidelink control information corresponding to a first sending device, wherein the sidelink control information corresponding to the first sending device comprises MIMO (English full name: Multiple Input Multiple Output, Chinese full name: multiple-input multiple-output) transmission configuration parameter information; and
a receiving unit, configured to receive data sent by the first sending device to the receiving device in a MIMO manner based on the MIMO transmission configuration parameter information comprised in the sidelink control information corresponding to the first sending device.

28. The receiving device according to claim 27, wherein
the receiving unit is configured to receive D2D (English full name: Device to Device, Chinese full name: device-to-device) transmission information corresponding to the first sending device that is sent by a network device;
the processing unit is configured to determine, based on the D2D transmission information corresponding to the first sending device, the sidelink control information corresponding to the first sending device, wherein the D2D transmission information comprises MIMO transmission control information, and the processing unit determines, based on the MIMO transmission control information comprised in the D2D transmission information corresponding to the first sending device, the MIMO transmission configuration parameter information comprised in the sidelink control information corresponding to the first sending device; and
a sending unit is configured to send the sidelink control information corresponding to the first sending device to the first sending device.

29. The receiving device according to claim 28, wherein
the receiving unit is configured to receive D2D transmission information corresponding to a second sending device that is sent by the network device;
the processing unit is configured to determine, based on the D2D transmission information corresponding to the second sending device, sidelink control information corresponding to the second sending device, wherein the D2D transmission information comprises MIMO transmission control information, and the processing unit determines, based on the MIMO transmission control information comprised in the D2D transmission information corresponding to the second sending device, MIMO transmission configuration parameter information comprised in the sidelink control information corresponding to the second sending device; and
the sending unit is configured to send the sidelink control information corresponding to the second sending device to the second sending device.

30. The receiving device according to claim 27, wherein
the receiving unit is configured to receive the sidelink control information corresponding to the first sending device that is sent by the first sending device, wherein the sidelink control information corresponding to the first sending device is determined by the first sending device based on D2D transmission information corresponding to the first sending device that is received from a network device.

31. The receiving device according to claim 30, wherein
the receiving unit is configured to receive sidelink control information corresponding to a second sending device that is sent by the first sending device, and the sidelink control information corresponding to the second sending device is determined by the first sending device based on D2D transmission information corresponding to the second sending device that is received from the network device.

32. The receiving device according to any one of claims 27 to 31, wherein
the receiving unit is configured to receive downlink control information sent by the network device; and
if the network device needs to send downlink data to the receiving device,
the receiving unit is configured to receive data sent by the first sending device and the network device to the receiving device in the MIMO manner.

33. A network device, comprising:
a receiving unit, configured to receive D2D (English full name: Device to Device, Chinese full name: device-to-device) communication request information sent by a first sending device, wherein the D2D communication comprises communication between the first sending device and a receiving device, and the D2D communication request information comprises identification information of the receiving device;
a processing unit, configured to determine D2D transmission information corresponding to the first sending device, wherein the D2D transmission information comprises MIMO transmission control information; and
a sending unit, configured to send the D2D transmission information corresponding to the first sending device.

34. The network device according to claim 33, wherein if D2D communication request information that is sent by a second sending device and received by the network device also comprises the identification information of the receiving device,
the processing unit is configured to determine that the first sending device and the second sending device send data to the receiving device in a MIMO manner.

35. The network device according to claim 33 or 34, wherein if the network device also needs to send data to the receiving device, the processing unit is configured to determine that the network device and the first sending device send data to the receiving device in the MIMO manner.

36. The network device according to any one of claims 33 to 35, wherein
the sending unit is configured to send the D2D transmission information corresponding to the first sending device to the receiving device.

37. The network device according to any one of claims 33 to 35, wherein
the sending unit is configured to send the D2D transmission information corresponding to the first sending device to the first sending device.

38. The network device according to claim 37, wherein
the sending unit is configured to send D2D transmission information corresponding to the second sending device to the first sending device.

39. A computer readable storage medium, wherein the computer readable storage medium stores executable program code, and the program code is used to implement the method according to any one of claims 1 to 7, or the method according to any one of claims 8 to 13, or the method according to any one of claims 14 to 19.

40. A sending device, wherein the sending device comprises a processor, a transceiver, and a memory, and the processor reads a program in the memory to perform the method according to any one of claims 1 to 7.

41. A receiving device, wherein the receiving device comprises a processor, a transceiver, and a memory, and the processor reads a program in the memory to perform the method according to any one of claims 8 to 13.

42. A network device, wherein the network device comprises a processor, a transceiver, and a memory, and the processor reads a program in the memory to perform the method according to any one of claims 14 to 19.
